# EUROPÄISCHE PATENTSCHRIFT

(11) **EP 0 964 233 B1**
(45) Veröffentlichungstag und Bekanntmachung des Hinweises auf die Patenterteilung: **02.01.2002**
(21) Anmeldenummer: 99109298.2
(22) Anmeldetag: 27.05.1999
(51) Int. Cl.: G01L 1/20, G06K 11/12

(54) **Airbag mit Sensor zur orts- und/oder zeitauflösenden Kraft- oder Druckmessung**
Airbag with sensor for position and/or time resolved measurement of force or pressure
Coussin de sécurité gonflable avec capteur de mesure de la force ou pression à résolution temporelle et/ou spatiale

(30) Priorität: 13.06.1998 DE 19826484
(43) Veröffentlichungstag der Anmeldung: 15.12.1999
(73) Patentinhaber: Volkswagen Aktiengesellschaft, 38436 Wolfsburg (DE)
(72) Erfinder: Bahr, Ullrich, Dr., 38110 Braunschweig (DE)

(56) Entgegenhaltungen:
- DE-A- 19 625 730
- GB-A- 2 115 556
- US-A- 4 795 998

## Beschreibung

Die Erfindung betrifft einen Airbag mit einem Sensor zur orts- und/oder zeitauflösenden Kraft- oder Druckmessung, der ein Trägermaterial mit spannungsbeaufschlagbaren Spalten- und Zeilenleiterbahnen aufweist.

Es sind Sensoren bekannt, bei denen das Trägermaterial eine Kunststoff-Folie ist, auf welche die Spalten- und Zeilenleiterbahnen per Siebdruck aufgebracht sind. Zwischen diesen Leiterbahnen ist eine leitfähige Tinte eingebracht, deren Widerstand sich bei einwirkenden Druckkräften ändert. Die bekannten Meßfolien besitzen den Nachteil, daß sie nur eine geringe Biege- und Wölb-Flexibiltät aufweisen und insbesondere anfällig gegen durch Knittem des Trägermaterials hervorgerufene Störeinflüsse sind. Ein weiterer Nachteil der bekannten Druckmeß-Folie besteht darin, daß sie auf die Oberfläche des Objekts, dessen Druck- oder Kraftbeaufschlagung gemessen werden soll, aufgebracht werden muß. Sie verändert somit in nachteiliger Art und Weise strukturelle und/oder funktionelle Eigenschaften der Oberfläche des Meßobjekts, z. B. das Reibverhalten der Oberfläche. Dies ist insbesondere bei Sicherheitsversuchen mit antropomorphen Testpuppen (Dummies) im automotiven Bereich von Nachteil.

Die US-A-4,795,998 betrifft einen matrixförmigen Sensor zur Sensierung eines darauf ausgeübten Drucks, z. B. für Türbetätigungen oder Einbrecher-Alarmanlagen, d. h. für Anwendungen in der Haustechnik. Eine Anwendung des dortigen Sensors in der Kraftfahrzeugtechnik, insbesondere in Verbindung mit einem Airbag, ist dort nicht erwähnt und auch nicht angeregt.

Die GB-A-2 115 556 betrifft einen taktilen Sensor, bestehend aus einer durch Druck verformbaren Matte mit einer matrixförmigen Anordnung von Elektroden. Mittels dieses Sensors kann ein darauf ausgeübter Druck ermittelt werden. Ein konkretes Anwendungsgebiet für diesen Sensor ist nicht angegeben.

Ein Airbag gemäß der Erfindung ist im Anspruch 1 definiert.

Ein Vorteil des erfindungsgemäßen Airbags ist darin zu sehen, daß der Sensor in besonders einfacher Weise in vorhandenes Gewebe des Airbags integriert ist, wobei ein einfacher und preiswerter Herstellungsprozeß und eine große mechanische Robustheit gegeben ist. Diese Integration der leitfähigen Fasern in das Gewebe des Airbags besitzt außerdem den Vorteil, daß durch den Sensor die strukturellen und/oder funktionellen Oberflächeneigenschaften des Gewebes des Airbags nicht oder nur unwesentlich beeinflußt werden.

Der orts- und/oder zeitauflösende Sensor zeichnet sich dadurch aus, daß ein Knittern des Trägermaterials keine Störeinflüsse auf die Ausgangssignale des Sensors ausübt, da die leitfähigen Fasern beweglich sind und daher geringere Scherkräfte auftreten.

Weiter zeichnet sich der Sensor durch seine gewebeartige und daher flexible Struktur aus. Diese bringt in vorteilhafter Art und Weise eine hohe Biege- und Wölb-Flexibilität mit sich, so daß sich der Sensor besonders für einen Einsatz bei beliebig geformten Meßflächen oder solchen Meßflächen, die sich während der Messung deformieren, eignet.

Eine vorteilhafte Weiterbildung der Erfindung sieht vor, daß als leitfähige Fasem elastische Fasern, insbesondere Kohlefasern oder halbleitende Polymerfasern, verwendet werden. Eine derartige Maßnahme besitzt den Vorteil, daß sich die elastischen Fasern in hohem Maße auch im gebogenen oder gekrümmten Zustand an den Verlauf ihres Trägergewebes anpassen.

Weitere vorteilhafte Weiterbildung der Erfindung sind Gegenstand der abhängigen Ansprüche.

Weitere Einzelheiten der Erfindung sind dem Ausführungsbeispiel zu entnehmen, daß im folgenden anhand der einzigen Figur beschrieben wird. Es zeigt:

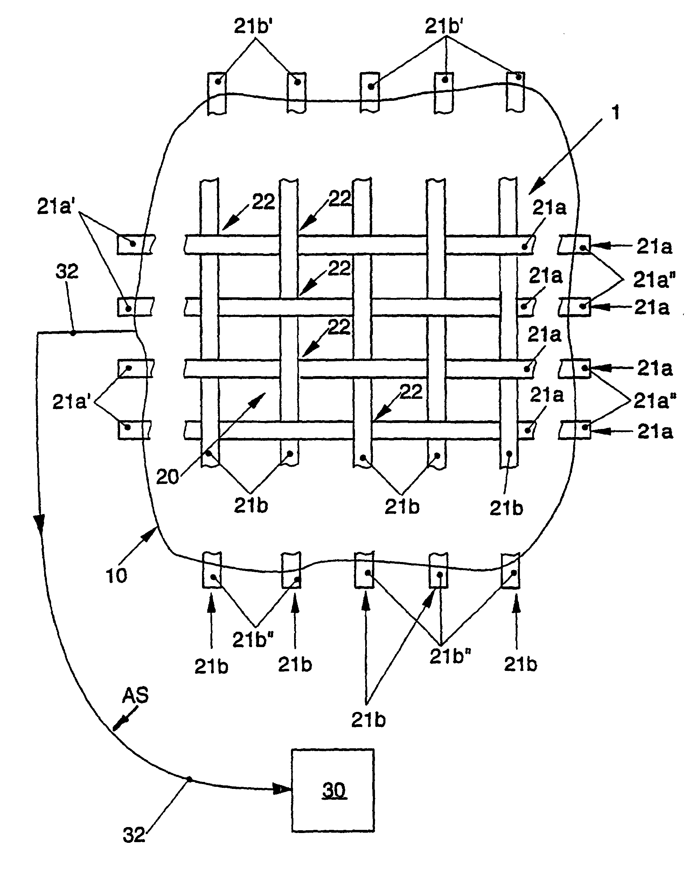

- Figur 1: ein Ausführungsbeispiel eines Sensors.

In Figur 1 ist ein allgemein mit 1 bezeichneter Sensor dargestellt, der im wesentlichen aus einem matrixartigen Raster 20 von leitfähigen Zeilenfasem 21a und Spaltenfasem 21b besteht, wobei die Zeilenfasem 21a und die Spaltenfasem 21b an Kontaktstellen 22 jeweils übereinanderliegend angeordnet sind. Die Zeilenfasem 21a und die Spaltenfasem 21b sind in ein in Figur 1 nur schematisch dargestelltes Trägergewebe 10 eingewebt und sind an ihren Enden 21a', 21a" bzw. 21b', 21b" über elektrische Verbindungskabel 32 mit einer Auswerteelektronik 30 verbunden. Das Material der Fasern 21a, 21b ist hierbei derart gewählt, daß der Kontaktwiderstand zwischen einer Zeilenfaser 21a und einer Spaltenfaser 21b von der Druckbeaufschlagung der Kontaktstelle 22 abhängig ist. Vorzugsweise werden hierzu elastische Fasern, insbesondere leitende Kohlefasem oder halbleitende Polymerfasern, verwendet. Außerdem wird bevorzugt, daß die Fasern 21a, 21b streifenförmig, kreisförmig oder rautenförmig ausgebildet sind.

Dem Fachmann ist ohne weiteres ersichtlich, daß das Rastermaß des durch die Zeilenfasem 21a und Spaltenfasem 21b gebildeten Rasters 20 im wesentlichen durch zu erzielende Ortsauflösung vorgegeben ist. Ebenso bedarf es keiner Erläuterung, daß das Trägergewebe 10 hinsichtlich seiner Festigkeit und Steifigkeit ebenfalls dem gewünschten Einsatzzweck angepaßt wird.

Die leitfähigen Fasern 21a, 21b des Sensors 1 sind in das Gewebe des Airbags eingewebt, so daß diese Oberflächenschicht das Trägergewebe 10 ausbildet.

Da - wie bereits oben beschrieben - die Fasern 21a, 21b derart konfiguriert sind, daß sich bei einer Druckänderung an einer Kontaktstelle 22 der Kontaktwiderstand ändert, wird bewirkt, daß sich auch das Ausgangssignal AS der spannungsbeaufschlagten Fasern 21a, 21b ändert, so daß die Auswerteelektronik 30 aus dieser Signaländerung die an der jeweiligen Kontaktstelle 22 herrschende Druckbelastung ermitteln kann.

Vorzugsweise kann auch vorgesehen sein, daß zwischen der Auswerteelektronik 30 und dem Sensor 1 eine Vorauswerteeinheit angeordnet ist, welche die Ausgangssignale AS der zu einem bestimmten Kontaktpunkt 22 korrelierten Zeilenfaser 21a und Spaltenfaser 21b multiplexartig erfaßt. Diese Maßnahme besitzt den Vorteil, daß hierdurch eine Verringerung der Anzahl der zur Auswerteelektronik 30 führenden Verbindungskabel 32 und/oder der zu dieser Auswerteelektronik 30 geleiteten Signalmenge erzielt wird, indem Meßsignale, die für die eigentliche Messung nicht relevant sind, bereits von der Vorauswerteeinheit unterdrückt werden.

Zusammenfassend ist festzustellen, daß der beschriebene Sensor 1 sich nicht nur durch seinen einfachen und daher kostengünstigen Aufbau auszeichnet. Vielmehr ist der Sensor 1 in einfacher Art und Weise in ein bereits vorhandenes Gewebe eines Airbags integriert. Außerdem besitzt er eine hohe Biege- und Wölb-Flexibilität, so daß er sich besonders gut für einen Einsatz bei gewölbten Meßflächen oder Meßflächen, die während der Messung deformiert werden, eignet.

### BEZUGSZEICHENLISTE

- 1: Sensor
- 10: Trägermaterial
- 20: Raster
- 21a: Zeilenfasern
- 21a', 21a": Enden der Zeilenfasern
- 21b: Spaltenfasern
- 21b', 21b": Enden der Spaltenfasern
- 22: Kontaktstelle
- AS: Ausgangssignal
- 30: Auswerteelektronik
- 32: Verbindungskabel

## Patentansprüche

1. Airbag für ein Kraftfahrzeug, **gekennzeichnet durch** einen Sensor zur orts- und/oder zeitauflösenden Kraft- oder Druckmessung, der ein Trägermaterial (10) mit spannungsbeaufschlagbaren Spalten- und Zeilenleiterbahnen aufweist, wobei das Trägermaterial ein Trägergewebe (10) des Airbags ist, die Spalten- und Zeilenleiterbahnen als leitfähige Spaltenfasern (21a) bzw. Zeilenfasern (21b) ausgebildet und in das Trägergewebe (10) eingewebt sind, und das Material dieser leitfähigen Fasern (21a, 21b) derart ausgewählt ist, daß ein Kontaktwiderstand an einer Kontaktstelle (22) zwischen einer Spaltenfaser (21a) und einer Zeilenfaser (21b) von der Kraft- oder Druckbelastung der Kontaktstelle (22) abhängig ist.

2. Airbag nach Anspruch 1, **dadurch gekennzeichnet, daß** als Material für zumindestens eine der Spaltenfasern (21a) oder der Zeilenfasern (21b) eine elastische Faser, insbesondere eine Kohlefaser oder eine halbleitende Polymerfaser, verwendet ist.

3. Airbag nach einem der vorangehenden Ansprüche, **dadurch gekennzeichnet, daß** die Spaltenfasern (21a) und die Zeilenfasem (21b) ein matrixartiges Raster (20) ausbilden.

4. Airbag nach einem der vorangehenden Ansprüche, **dadurch gekennzeichnet, daß** die Enden (21a', 21a"; 21b', 21b") der Spaltenfasern (21a) und der Zeilenfasern (21b) über mindestens eine Verbindungsleitung (32) mit einer Auswerteelektronik (30) verbindbar sind.

5. Airbag nach einem der vorangehenden Ansprüche, **dadurch gekennzeichnet, daß** mindestens eine der Fasem (21a, 21b) streifenförmig, kreisförmig oder rautenförmig ausgebildet ist.

6. Airbageinrichtung nach einem der vorangehenden Ansprüche, **gekennzeichnet durch** einen Airbag (1) nach einem der Ansprüche 1 bis 5.

7. Airbageinrichtung nach Anspruch 6, **dadurch gekennzeichnet, daß** in der Auswerteelektronik (30) eine Signaländerung eines Ausgangssignals (AS) des Sensors (1) registrierbar und daraus die Druck- oder Kraftbeaufschlagung mindestens einer Kontaktstelle (22) ermittelbar ist.

8. Airbageinrichtung nach einem der Ansprüche 6 oder 7, **dadurch gekennzeichnet, daß** dem Sensor (10) eine Vorauswerteeinheit nachgeschaltet ist.

## Claims

1. Airbag for a motor vehicle, **characterised by** a sensor for position-resolved and/or time-resolved force or pressure measurement, which comprises a carrier material (10) with column and line conductive tracks which can be acted upon by a voltage, wherein the carrier material is a carrier textile (10) of the airbag, the column and line conductive tracks are formed as conductive column fibres (21a) or line fibres (21b) and are woven into the carrier textile (10), and the material of these conductive fibres (21a, 21b) is selected in such a way that a contact resistance at a contact point (22) between a column fibre (21a) and a line fibre (21b) is dependent upon the force or pressure loading of the contact point (22).

2. Airbag according to claim 1, **characterised in that** the material used for at least one of the column fibres (21 a) or the line fibres (21 b) is an elastic fibre, in particular a carbon fibre of s semi-conductive polymer fibre.

3. Airbag according to any one of the preceding claims,.**characterised in that** the column fibres (21a) and the line fibres (21b) form a matrix-like grid (20).

4. Airbag according to any one of the preceding claims, **characterised in that** the ends (21', 21a"; 21b', 21b") of the column fibres (21a) and the line fibres (21b) can be connected to evaluation electronics (30) by means of at least one connecting line (32).

5. Airbag according to any one of the preceding claims, **characterised in that** at least one of the fibres (21a, 21b) is formed in a strip-like, circular or rhombus-shaped manner.

6. Airbag device according to any one of the preceding claims, **characterised by** an airbag (1) according to any one of claims 1 to 5.

7. Airbag device according to claim 6, **characterised in that** in the evaluation electronics (30) a signal change in an output signal (AS) of the sensor (1) can be registered and the pressure or force acting upon at least one contact point (22) can be determined therefrom.

8. Airbag device according to one of claims 6 or 7, **characterised in that** a pre-evaluation unit is connected downstream of the sensor (10).

## Revendications

1. Airbag destiné à un véhicule automobile, **caractérisé par** un capteur de mesure de force ou de pression à résolution temporelle et/ou spatiale, qui comporte un matériau de support (10) avec des voies conductrices en forme de colonnes et de lignes pouvant être alimentées en tension, le matériau de support étant une texture de support (10) de l'airbag, les voies conductrices en forme de colonnes et de lignes étant agencées en tant que fibres conductrices de colonnes (21a) ou de fibres conductrices de lignes (21b), et étant intégrées dans la texture de support (10), et le matériau de ces fibres conductrices (21a, 21b) étant choisi de telle sorte qu'une résistance de contact au niveau d'un point de contact (22) entre une fibre de colonne (21a) et une fibre de ligne (21b) dépende de la contrainte de force ou de pression exercée sur le point de contact (22).

2. Airbag selon la revendication 1, **caractérisé en ce que** le matériau utilisé pour l'une au moins des fibres de colonnes (21a) ou des fibres de lignes (21b) est une fibre élastique, notamment un fibre de carbone ou une fibre semi-conductrice de polymère.

3. Airbag selon l'une quelconque des revendications précédentes, **caractérisé en ce que** les fibres de colonnes (21a) et les fibres de lignes (21b) forment une trame (20) de type matrice.

4. Airbag selon l'une quelconque des revendications précédentes, **caractérisé en ce que** les extrémités (21a', 21a" ; 21b', 21b") des fibres de colonnes (21a) et des fibres de lignes (21b) peuvent être reliées à une électronique d'évaluation (30) par l'intermédiaire d'au moins une ligne de liaison (32).

5. Airbag selon l'une quelconque des revendications précédentes, **caractérisé en ce que** l'une au moins des fibres (21a, 21b) est agencée sous la forme d'une bande, d'un cercle ou d'un losange.

6. Dispositif à airbag selon l'une quelconque des revendications précédentes, **caractérisé par** un airbag (1) selon l'une quelconque des revendications 1 à 5.

7. Dispositif à airbag selon la revendication 6, **caractérisé en ce qu'**une modification de signal d'un signal de sortie (AS) du capteur (1) peut être enregistrée dans l'électronique d'évaluation (30), et **en ce qu'**à partir de cela, la contrainte de pression ou de force exercée sur l'un au moins des points de contact (22) peut être déterminée.

8. Dispositif à airbag selon l'une des revendications 6 ou 7, **caractérisé en ce qu'**une unité de pré-évaluation est disposée en aval du capteur (10).
